**Europäisches Patentamt**

**European Patent Office**

**Office européen des brevets**

(19)

(11) Publication number : **0 380 515 B1**

# EUROPEAN PATENT SPECIFICATION

(12)

(45) Date of publication of patent specification :
**29.04.92 Bulletin 92/18**

(51) Int. Cl.⁵ : **B62D 53/06,** B65G 7/04, B65D 63/02

(21) Application number : **88907855.6**

(22) Date of filing : **09.09.88**

(86) International application number :
**PCT/SE88/00464**

(87) International publication number :
**WO 89/02388 23.03.89 Gazette 89/07**

(54) **VERTICALLY ADJUSTABLE TRAILER.**

(30) Priority : **15.09.87 SE 8703570**

(43) Date of publication of application :
**08.08.90 Bulletin 90/32**

(45) Publication of the grant of the patent :
**29.04.92 Bulletin 92/18**

(84) Designated Contracting States :
**AT BE CH DE FR GB IT LI LU NL SE**

(56) References cited :
**FR-A- 2 180 094**
**SE-A- 326 409**

(56) References cited :
**US-A- 3 156 484**
**US-A- 3 429 585**
**US-A- 3 795 336**
**US-A- 4 120 513**

(73) Proprietor : **OHLSON, Kjell**
**Dragarbrunnsgatan 7**
**S-753 32 Uppsala (SE)**

(72) Inventor : **OHLSON, Kjell**
**Dragarbrunnsgatan 7**
**S-753 32 Uppsala (SE)**

(74) Representative : **Kummelsten, Per-Arne**
**UPPSALA PATENTBYRA P.O. Box 9013**
**S-750 09 Uppsala (SE)**

## Description

### Technical field

The present invention relates to trailers, i.e. to transport vehicles, the front of which can be connected to a traction vehicle and the rear of which is carried by at least one wheel set. More specifically the invention relates to trailers which are vertically adjustable.

### Background of the invention

The loading and unloading of trailers and distribution cars involves a number of problems, primarily because of local variations in the distribution network.

Trailers are often loaded from a loading platform level with the loading plane of the trailer but in a distribution network such loading platforms are only available at greater users. As a consequence the unloading has, so far, to a great extent been carried out by means of a so-called tail lift, which brings the cargo down to ground-level on a piece-by-piece basis.

Especially when using covered distribution cars also the total height of the vehicle can be a problem since it is not uncommon that the vehicles have to pass through gates which are too low for the vehicle. On the other hand, the loading space should be sufficiently high to permit the staff to walk upright when loading and unloading the cargo.

When using a tail lift for the loading and unloading operations, the goods have to be arranged in a strict order in order to be accessible. However, it may still be necessary to re-stowe the goods because empty pallets, roller containers or the like often have to be returned from the distribution place. When using tail lifts the loading and unloading also is comparatively time consuming when more than one piece of goods are to be handled.

Attempts have been made to automate the loading and unloading operations, but this has only been possible in very special cases. Attempts have also been made to provide for automated loading based on a tail lift, but the suggested solutions have been very complex and had several limitations.

Joint transportation with railroads ("piggybacking") has not either been as extensive as would be desirable. The main reason is that trailers have to be transported on special low-design railway trucks in order to keep within the permissible loading profile of the railroad. Similar problems with the height and the high centre of gravity of the vehicles also occur in transport on ferries.

Some of these problems, and related problems, have been observed in the patent literature, which i.a. discloses several examples of vertically adjustable trailers. For example, SE-A-326 409, FR-A-2 180 094 and US-A-3 322 292 disclose the use of hydraulic jacks for raising and lowering wheel sets carried by pivotable arms, but the prior art only partly solve the above mentioned problems, and there is still a great need of improved vertical adjustment devices for trailer vehicles, especially as regards improved possibilites of loading and unloading, improved accessibility, improved load distribution and traffic properties, as well as design simplicity and reliability.

### Object of the invention

The present invention intends to solve the above indicated problems and to provide a trailer which also has other advantages.

It is thus an object of the invention to provide a trailer which is vertically adjustable so that it can be lowered for loading/unloading to let the loading plane rest directly on the ground or take an arbitrary desired height position.

It is another object of the invention to provide a trailer of the indicated type, the rear end of wich can be positioned close to a loading platform for loading and unloading from the platform.

A further object of the invention is to provide a trailer, the rear wheel set of which can be pivoted to a position underneath the trailer.

A still further object of the invention is to provide a trailer which can be raised and lowered while maintaining its horisontal position during the entire motion of vertical adjustment.

These and other objects and advantages of the trailer according to the invention will be explained further below.

### Summary of the invention

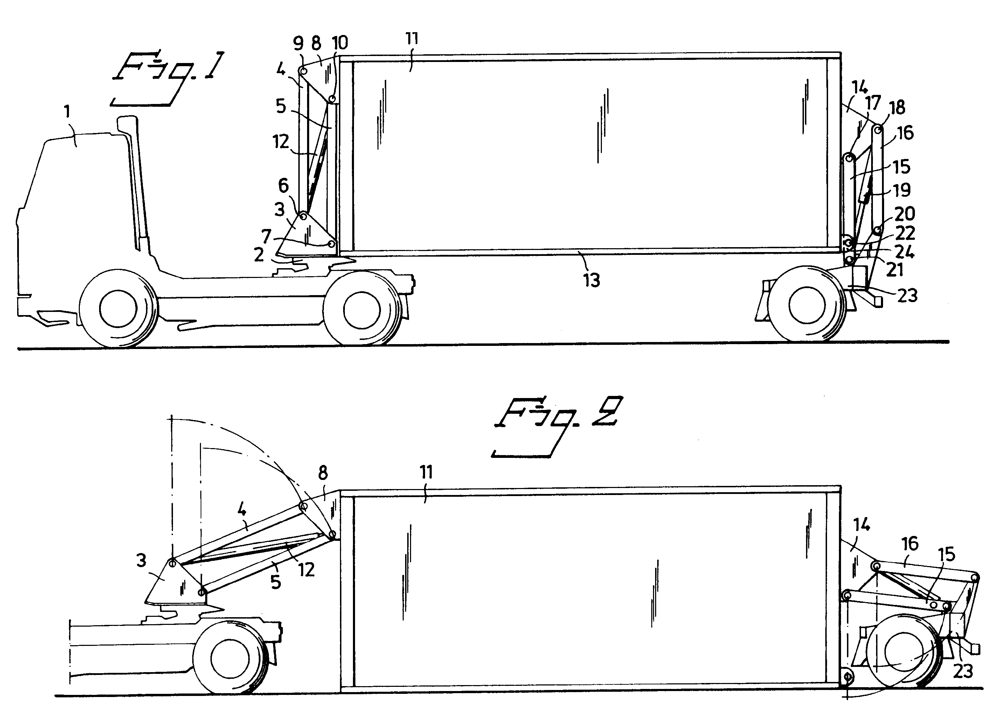

The above mentioned objects and advantages are according to the invention achieved by means of a vertically adjustable trailer intended to be connected to a traction vehicle (1) and provided with at least one wheel suspension device (23), which is connected to the trailer (11) by means of link arms, said trailer comprising front link arms (4, 5), which are pivotally connected between the traction vehicle (1) and the front end of the trailer (11), and rear link arms (15, 16), which are pivotally connected between the rear end of the trailer (11) and the wheel suspension device (23), characterized in that the front and rear link arms (4, 5 and 15, 16 respectively) are so arranged that they can be pivoted between a first position (Fig. 1), in which the front end of the trailer rests on the traction vehicle (1) and the wheels of the trailer are retracted under the loading space thereof, and a second position (Fig. 2), in which the loading space rests on the ground between the traction vehicle (1) and the trailer wheels.

The above mentioned objects and advantages are according to the invention achieved by giving the trailer the characterizing features which are indicated in the appended claims.

In accordance with the invention the trailer thus comprises a first link arm system at its front end and a second link arm system at its rear end. The first link arm system is pivotally connected to the traction vehicle, and the second link arm system is pivotally connected to a wheel suspension unit. By means of suitable power sources, for example hydraulic cylinders, the link arm systems can be pivoted between a first position (transport position), in which the front part of the trailer rests on the traction vehicle and its wheels are positioned under the loading plane, and a second position (ground position), in which the loading plane rests on the ground between the traction vehicle and the trailer wheels.

In an especially preferred embodiment the link arm systems are designed as pairs of parallel link arms, which remain parallel during the entire pivoting movement between the transport position and the ground position.

The link arm system at the rear end of the trailer is preferably located adjacent the outer sides of the trailer to make the loading space accessible from the rear end of the vehicle. In the transport position the wheels are under the loading space, which provides for proper distribution of the load combined with an advantageous wheel distance for traffic purposes. When loading and unloading from a loading platform via the rear end of the trailer, the loading space can be moved close to the edge of the platform. Further, the link arm system is preferably located completely inside the outer contours of the longitudinal sides, so that the trailer also will fit loading platforms and loading ports provided with weather seals. Furthermore, the link system preferably also has a geometry such that the wheels and the entire wheel suspension unit retain the parallel position in relation to the loading plane during the entire vertical movement of the trailer.

By means of the link arm system at the front end, the trailer can be moved from its support on the traction vehicle to a position on the ground behind the vehicle or to an arbitrary intermediate position.

The link arm system makes it possible to lower the trailer, for example for passing through a temporary height obstruction, so that the loading plane will be positioned a desired short distance above the ground level.

The loading or unloading can be done from a loading platform as well as directly from ground level. The goods will then be accessible from the sides, which facilitates the handling considerably. The loading and unloading will be speeded up when there are more than one pieces of goods, since only one lowering or lifting movement is required.

The system is suitable for automatic handling, especially in connection with unitary loads, since it is possible, by pressing in goods from one side of the trailer, to discharge the existing load from the other side of the trailer.

At storage parks the need of ground stabilization can be eliminated, since the load of the trailer in the lowered position will be distributed over the entire contact surface with the ground.

Road-rail transports will be simplified since conventional railway trucks can be used. In such a case the trailer can be transported in the lowered position on the railway truck, thereby keeping within the permissable loading contour.

In transport on ferries a lowered trailer provides for a low centre of gravity and good lashing possibilities.

### Short description of the drawing

In the enclosed drawing Figure 1 is a side elevational view of one embodiment of a vertically adjustable trailer, which is shown in the transport position and connected to a traction vehicle.

Figure 2 shows the trailer of Figure 1 in the ground position behind the traction vehicle.

### Description of preferred embodiments

In the drawing reference numeral 1 signifies a traction vehicle of a known design. A support 3 for link arms 4 and 5 rests on the turn table 2 of the traction vehicle. The link arms are pivotally journalled in the support by means of shafts 6 and 7. The upper ends of the link arms 4 and 5 are connected to a support 8 by means of shafts 9 and 10. The support 8 is secured to a trailer 11. The distance between the shafts 6 and 10 can be adjusted by means of a hydraulic cylinder 12 or any analogous device, the length of which can be adjusted (hydraulically, penumatically or mechanically).

The link arm system has a geometry such that the lower front edge of the trailer 11, when the hydraulic cylinder is activated for an expelling movement, describes an arc behind the traction vehicle and can be lowered so that the bottom side of the loading plane 13 will rest on ground level.

The rear end of the trailer carries a support 14 for link arms 15 and 16, which are pivotally journalled in the support by means of shafts 17 and 18. The lower ends of the link arms 15 and 16 are pivotally connected to a wheel suspension device 23 by means of shafts 21 and 20.

The distance between the shafts 18 and 21 can be controlled by means of a hydraulic cylinder 19 or any other length adjustable device, similar to the hydraulic cylinder 12 for the front link arm system.

The geometry of the link arm system is such that a line through the wheel centre parallel with the loading plane will remain parallel during the entire motion of the link system.

When the hydraulic cylinder 19 is fully expelled, the wheels will be in a transport position under the trailer, as shown in Figure 1, and when the cylinder is retracted the wheels will be behind the tralier, as shown in Figure 2. The hydraulic clinders 12 and 19, which can be controlled independently or synchronously, can be controlled from the traction vehicle 1 and/or by means of suitable controls provided on the trailer 11. Similarly, the driving power of the hydraulic cylinders can be taken either from the hydraulic system of the traction vehicle or from special hydraulic systems on the trailer.

In the transport position the link arm system is preferably locked mechanically, for example by means of attachment ears 24, which are firmly secured to the lower rear edge of the trailer and have holes for keys 22. Corresponding holes are provided in the link arms 15. For mechanical locking the keys 22 are pressed through the attachment ears 24 and the linlks 15.

Both the pair of front link arms 4, 5 and the pair of rear link arms 15, 16 are preferably located adjacent the longitudinal side walls of the trailer 11 and are doubled, i.e. there is a pair of link arms 4, 5 and 15, 16 respectively at each longitudinal side wall. The two pairs of front link arms 4, 5 and the two pairs of rear link arms 15, 16 may be connected to common supports 3, 8 and 14, 23 respectively.

## Claims

1. A vertically adjustable trailer intended to be connected to a traction vehicle (1) and provided with at least one wheel suspension device (23), which is connected to the trailer (11) by means of link arms, said trailer comprising front link arms (4, 5), which are pivotally connected between the traction vehicle (1) and the front end of the trailer (11), and rear link arms (15, 16), which are pivotally connected between the rear end of the trailer (11) and the wheel suspension device (23),
characterized in that the front and rear link arms (4, 5 and 15, 16 respectively) are so arranged that they can be pivoted between a first position (Fig. 1), in which the front end of the trailer rests on the traction vehicle (1) and the wheels of the trailer are retracted under the loading space thereof, and a second position (Fig. 2), in which the loading space rests on the ground between the traction vehicle (1) and the trailer wheels.

2. A trailer according to claim 1,
characterized in that the front link arms comprise at least one pair of parallel link arms (4, 5), the one ends of which are pivotally journalled on a support (3) on the traction vehicle (1) and the opposite ends of which are pivotally journalled on the trailer (11), so that the link arms (4, 5) remain parallel when pivoting between said first and second positions.

3. A trailer according to claim 2,
characterized in that the pivoting between said first and second positions is obtained by means of a driving device (12), preferably a hydraulic cylinder, by adjustment of the distance between the shaft (6) for mounting one of the link arms (4) on the traction vehicle (1) and the shaft (10) for mounting the other link arm (5) on the trailer.

4. A trailer according to any one of claims 1-3,
characterized in that the rear link arms comprise at least one pair of parallel link arms (15, 16), the one ends of which are pivotally journalled on a support (14) on the rear end of the trailer and the opposite ends of which are pivotally journalled on the wheel suspension (23) of the trailer, so that the link arms (15, 16) remain parallel when pivoting between said first and second positions.

5. A trailer according to claim 4,
characterized in that the pivoting between said first and second positions is provided by at least one driving device (19), preferably a hydraulic cylinder, by adjustment of the distance between the shaft (21) for mounting one of the link arms (15) on the wheel suspension (23) and the shaft (17) for mounting the other link arm (16) on the trailer.

6. A trailer according to any one of claims 1-5,
characterized in that said driving devices (12, 19) can be locked in an arbitrary position between said first and second positions.

7. A trailer according to any one of the preceding claims,
characterized in that the front and rear link arms (4, 5 and 15, 16, respectively), can be controlled independently of each other so that the inclination of the loading plane of the trailer can be adjusted.

8. A trailer according to any one of the preceding claims,
characterized in that at least the rear link arms (15, 16) are located adjacent the side walls of the trailer, so that the loading space of the trailer becomes accessible from the rear end.

9. A trailer according to any one of preceding claims,
characterized in that it comprises devices (22, 24) for mechanically locking the link arm systems (4, 5, 12, 15, 16, 19) to the trailer in the transport position.

## Patentansprüche

1. Vertikal verstellbarer Anhänger, der dazu bestimmt ist, mit einem Zugfahrzeug (1) verbunden zu werden und der mit wenigstens einer Radaufhängungseinrichtung (23) versehen ist, welche mit dem Anhänger (11) mittels Gelenkarmen verbunden ist, wobei der Anhänger vordere Gelenkarme (4, 5) umfaßt, welche drehbar zwischen dem Zugfahrzeug (1) und dem vorderen Ende des Anhängers (11) verbunden sind, und rückwärtige Gelenkarme (15, 16), welche drehbar zwischen dem rückwärtigen Ende des Anhängers (11) und der Radaufhängungseinrichtung (23) verbunden sind,
dadurch **gekennzeichnet**, daß die vorderen und rückwärtigen Gelenkarme (4, 5 bzw. 15, 16) so eingerichtet sind, daß sie zwischen einer ersten Position (Fig.1), in welcher das vordere Ende des Anhängers auf dem Zugfahrzeug (1) ruht und die Räder des Anhängers unter den Laderaum desselben eingezogen sind, und einer zweiten Position (Fig. 2), in welchem der Laderaum auf dem Boden zwischen dem Zugfahrzeug (1) und den Anhängerrädern ruht, verschwenkt werden können.

2. Anhänger nach Anspruch 1,
dadurch **gekennzeichnet**, daß die vorderen Gelenkarme wenigstens ein Paar von parallelen Gelenkarmen (4, 5) umfassen, von welchen die einen Enden drehbar auf einem Halter (3) auf dem Zugfahrzeug (1) gelagert sind, und deren entgegengesetzte Enden drehbar auf dem Anhänger (11) gelagert sind, so daß die Gelenkarme (4, 5) parallel bleiben, wenn sie sich zwischen der ersten und zweiten Position verschwenken.

3. Anhänger nach Anspruch 2,
dadurch **gekennzeichnet**, daß das Verschwenken zwischen der ersten und zweiten Position mittels einer Antriebseinrichtung (12), vorzugsweise einem Hydraulikzylinder, durch Verstellen des Abstands zwischen der Welle (6) zum Anbringen von einem der Gelenkarme (4) auf dem Zugfahrzeug (1) und der Welle (10) zum Anbringen des anderen Gelenkarms (5) auf dem Anhänger erreicht wird.

4. Anhänger nach irgendeinem der Ansprüche 1 bis 3,
dadurch **gekennzeichnet**, daß die rückwärtigen Gelenkarme wenigstens ein Paar von parallelen Gelenkarmen (15, 16) umfassen, von welchen die einen Enden drehbar auf einem Halter (14) auf dem rückwärtigen Ende des Anhängers gelagert sind, und von denen die entgegengesetzten Enden drehbar auf der Radaufhängung (23) des Anhängers gelagert sind, so daß die Gelenkarme (15, 16) parallel bleiben, wenn sie sich zwischen der ersten und zweiten Position verschwenken.

5. Anhänger nach Anspruch 4,
dadurch **gekennzeichnet**, daß das Verschwenken zwischen der ersten und zweiten Position mittels wenigstens einer Antriebseinrichtung (19), vorzugsweise einem Hydraulikzylinder, durch Verstellen des Abstands zwischen der Welle (21) zum Anbringen von einem der Gelenkarme (15) auf der Radaufhängung (23) und der Welle (17) zum Anbringen des anderen Gelenkarms (16) auf dem Anhänger vorgesehen ist.

6. Anhänger nach irgendeinem der Ansprüche 1 bis 5,
dadurch **gekennzeichnet**, daß die Antriebseinrichtungen (12, 19) in einer willkürlichen Position zwischen der ersten und zweiten Position arretiert werden können.

7. Anhänger nach irgendeinem der vorhergehenden Ansprüche,
dadurch **gekennzeichnet**, daß die vorderen und rückwärtigen Gelenkarme (4, 5 bzw. 15, 16) unabhängig voneinander so gesteuert werden können, daß die Neigung der Ladeebene des Anhängers verstellt werden kann.

8. Anhänger nach irgendeinem der vorhergehenden Ansprüche,
dadurch **gekennzeichnet**, daß sich wenigstens die rückwärtigen Gelenkarme (15, 16) benachbart den Seitenwänden des Anhängers befinden, so daß der Laderaum des Anhängers von dem rückwärtigen Ende her zugänglich wird.

9. Anhänger nach irgendeinem der vorhergehenden Ansprüche,
dadurch **gekennzeichnet**, daß er Einrichtungen (22, 24) zum mechanischen Arretieren der Gelenkarmsysteme (4, 5, 12, 15, 16, 19) an dem Anhänger in der Transportposition umfaßt.

**Revendications**

1. Remorque réglable verticalement, destinée à être raccordée à un véhicule tracteur (1) et comportant au moins un dispositif de suspension de roues (23), qui est raccordé à la remorque (11) par des bras de liaison, ladite remorque comprenant des bras de liaison avant (4,5), qui sont raccordés de façon à pouvoir pivoter entre le véhicule tracteur (1) et l'extrémité avant de la remorque (11), et des bras de liaison arrière (15,16), qui sont raccordés de manière à pouvoir pivoter entre l'extrémité arrière de la remorque (11) et le dispositif de suspension de roues (23), caractérisée en ce que les bras de liaison avant et arrière (respectivement 4, 5 et 15, 16) sont disposés de manière à pouvoir pivoter entre une première position (figure 1), dans laquelle l'extrémité avant de la remorque est en appui sur le véhicule tracteur (1) et les roues de la remorque sont rétractées au-dessous de l'espace de chargement de cette remorque, et une seconde position (figure 2), dans laquelle l'espace de chargement est en appui sur le sol entre le véhicule tracteur (1) et les roues de la remorque.

2. Remorque selon la revendication 1, caractérisée en ce que les bras de liaison avant comprennent au moins un couple de bras de liaison parallèles (4,5), dont des premières extrémités sont tourillonnées de manière à pouvoir pivoter sur un support (3) sur le véhicule tracteur (1), et dont les extrémités opposées sont tourillonnées de manière à pouvoir pivoter sur la remorque (11), de sorte que les bras de liaison (4,5) restent parallèles lorsqu'ils pivotent entre lesdites première et seconde positions.

3. Remorque selon la revendication 2, caractérisée en ce que le pivotement entre lesdites première et seconde positions est obtenu au moyen d'un dispositif d'entraînement (12), de préférence un vérin hydraulique, par réglage de la distance entre l'arbre (6) de montage de l'un des bras de liaison (4) sur le véhicule tracteur (1) et l'arbre (10) de montage de l'autre bras de liaison (5) sur la remorque.

4. Remorque selon l'une quelconque des revendications 1-3, caractérisée en ce que les bras de liaison arrière comprennent au moins un couple de bras de liaison parallèles (15,16), dont des premières extrémités sont tourillonnées de manière à pouvoir pivoter sur un support (14) à l'extrémité arrière de la remorque et dont les extrémités opposées sont tourillonnées de manière à pouvoir pivoter sur la suspension de roues (23) de la remorque, de sorte que les bras de liaison (15,16) restent parallèles lorsqu'ils pivotent entre lesdites première et seconde positions.

5. Remorque selon la revendication 4, caractérisée en ce que le pivotement entre lesdites première et seconde positions est produit par au moins un dispositif d'entraînement (19), de préférence un vérin hydraulique, par réglage de la distance entre l'arbre (21) de montage de l'un des bras de liaison (15) sur la suspension de roue (23) et l'arbre (17) de montage de l'autre bras de liaison (16) sur la remorque.

6. Remorque selon l'une quelconque des revendications 1-5, caractérisée en ce que lesdits dispositifs d'entraînement (12,19) peuvent être bloqués dans une position quelconque entre lesdites première et seconde positions.

7. Remorque selon l'une quelconque des revendications précédentes, caractérisée en ce que les bras de liaison avant et arrière (respectivement 4, 5 et 15, 16) peuvent être commandés indépendamment les uns des autres de manière à permettre une inclinaison du plan de chargement de la remorque.

8. Remorque selon l'une quelconque des revendications précédentes, caractérisée en ce qu'au moins les bras de liaison arrière (15,16) sont situés au voisinage des parois latérales de la remorque de sorte que l'espace de chargement de la remorque devient accessible à partir de l'extrémité arrière.

9. Remorque selon l'une quelconque des revendications précédentes, caractérisée en ce qu'elle comprend des dispositifs (22,24) pour bloquer mécaniquement le système (4,5,12,15,16,19) des bras de liaison sur la remorque dans la position de transport.

Fig. 1

Fig. 2